# EUROPEAN PATENT APPLICATION

(11) **EP 4 693 571 A1**
(43) Date of publication of application: **11.02.2026**
(21) Application number: 23930931.3
(22) Date of filing: 18.12.2023
(51) Int. Cl.: H01M 10/058, H01M 10/052, H01M 10/0562

(54) **METHOD FOR MANUFACTURING ALL-SOLID-STATE BATTERY**

(30) Priority: 30.03.2023 JP 2023056395
(71) Applicant: AESC Japan Ltd., Yokohama-shi, Kanagawa 220-0012 (JP)
(72) Inventor: TSUDURA, Megumi, Zama-shi, Kanagawa 252-0012 (JP)
(74) Representative: Becker, Eberhard
(86) International application number: PCT/JP2023/045271
(87) International publication number: WO 2024/202312

(57) **Abstract**

The purpose of the present invention is to provide a method for manufacturing an all-solid-state battery capable of preventing deterioration of characteristics, and an all-solid-state battery obtained using the manufacturing method. The present invention is a method for manufacturing an all-solid-state battery including a step for laminating a negative electrode, a solid electrolyte membrane, and a positive electrode to form an electrode laminate, wherein the method for manufacturing an all-solid-state battery is characterized by including: a step for applying a slurry that contains a solid electrolyte in a solvent onto a film surface on which a release-agent-containing release agent layer is formed to form the solid electrolyte membrane; a step for removing the film from the release agent layer; and a step for laminating, on the positive electrode, the solid electrolyte membrane including the release agent layer exposed by removing the film, the manufacturing method being further characterized in that the solid electrolyte membrane and the positive electrode are laminated such that the release agent is present therebetween at a density of 0.01 mg/cm² to 0.5 mg/cm².

## Description

### Technical Field

The present invention relates to an all-solid-state battery including a solid electrolyte membrane and a method for manufacturing an all-solid-state battery. The all-solid-state battery of the present invention includes a lithium ion secondary battery, etc.

### Background Technology

In recent years, development of secondary batteries capable of repeated charge-discharge as automobile and household energy sources has been proceeding due to environmental considerations. While it is anticipated to develop secondary batteries that can be expected to have high capacity and high output, it is necessary to place even greater emphasis on safety at the same time.

In lithium ion secondary batteries, as one of the representative secondary batteries, solid batteries using solid electrolytes are known. An all-solid-state battery, which is one type of solid battery, includes a solid electrolyte layer, a positive electrode layer formed on one surface of the solid electrolyte layer and a negative electrode layer formed on the other surface, and a positive electrode plate connected to the positive electrode layer and a negative electrode plate connected to the negative electrode layer.

The positive electrode layer can be obtained by coating a slurry containing positive electrode active material particles, a binder, a solid electrolyte, and a solvent on a positive electrode current collector, and drying. An aluminum foil or the like can be used as the positive electrode current collector. On the other hand, the negative electrode can be obtained by coating a slurry containing negative electrode active material particles, a binder, a solid electrolyte, and a solvent on a negative electrode current collector, and drying. A copper foil can be used as the negative electrode current collector. Alternatively, a stainless steel foil having a lithium metal layer formed thereon can also be used as the negative electrode. The positive electrode layer and the negative electrode layer can further include a conductive additive.

The solid electrolyte layer can be formed by dispersing solid electrolyte powder in a solvent to form a slurry, applying, and drying. For example, the solid electrolyte layer can be formed directly on the surface of the negative electrode layer or positive electrode layer. The solid electrolyte layer can also be obtained by forming a solid electrolyte layer on the surface of a polyester substrate such as a polyethylene terephthalate (PET) film, and peeling off the substrate.

An electrode laminate is obtained by pressurizing the obtained positive electrode and negative electrode in a state where the positive electrode and the negative electrode are laminated with the solid electrolyte sandwiched therebetween. A positive electrode terminal and a negative electrode terminal are attached to this electrode laminate, and are housed and sealed in an exterior container, with one end of each of these terminals drawn out to the outside, thereby obtaining an all-solid-state battery.

Generally, a release agent layer such as a silicone compound is formed on the surface of the polyester film such that the solid electrolyte layer can be easily peeled off. In the case where this release agent layer transfers to the solid electrolyte layer, there are concerns about poor bonding between the solid electrolyte layer and the electrode, and generation of irreversible capacity due to electrolyte ions being incorporated into the release agent layer. Therefore, countermeasures are being studied in order to prevent the silicone compound from transferring to the solid electrolyte layer, etc.

In addition, there is a problem that the positive electrode, negative electrode, and solid electrolyte layer used in an all-solid-state battery are prone to peeling at the bonding interface therebetween. In order to enhance the strength of the bonding interface therebetween, countermeasures are also being taken to laminate these via an adhesive layer.

Patent Document 1 discloses a technology for preventing transfer of a release agent to a solid electrolyte layer by forming an antistatic layer on the surface of the polyester film in advance and performing pretreatments such as anchor coating, corona treatment, plasma treatment, and atmospheric pressure plasma treatment. Furthermore, Patent Document 2 discloses a technology for bonding a solid electrolyte layer and an electrode via an adhesive layer.

### Related Art Documents

### Patent Documents

Patent Document 1: Japanese Patent Application Laid-Open No. 2022-142259
Patent Document 2: International Publication No. 2020/137354

### SUMMARY OF INVENTION

### Problems to be Solved by the Invention

However, in the case of bonding electrodes such as positive electrode and negative electrode with a solid electrolyte via an adhesive layer, or bonding solid electrolytes together, the components of the adhesive layer become resistance and adversely affect battery characteristics. On the other hand, in the case of completely removing the adhesive layer, the bondability between electrodes such as positive electrode and negative electrode and a solid electrolyte, or the bondability between solid electrolytes becomes weak, and the bonding surface may peel off.

As a result of intensive studies carried out by the inventors, it was found that by leaving an appropriate amount of the release agent that transfers from the film to the solid electrolyte on the surface of the solid electrolyte or electrode, the resistance of the all-solid-state battery can be suppressed to the allowable minimum range, and insulation of the battery can be prevented.

### Means for Solving the Problems

The present invention provides a method for manufacturing an all-solid-state battery, including a step of laminating a negative electrode, a solid electrolyte membrane, and a positive electrode to form an electrode laminate. The method for manufacturing an all-solid-state battery includes: a step of applying a slurry containing a solid electrolyte in a solvent onto a surface of a film on which a release agent layer including a release agent is formed, to form the solid electrolyte membrane; a step of removing the film from the release agent layer; and a step of laminating the solid electrolyte membrane including the release agent layer exposed by removing the film, on the positive electrode, in which the solid electrolyte membrane and the positive electrode are laminated such that the release agent is present between the solid electrolyte membrane and the positive electrode at a density of 0.01 mg/cm² or more and 0.5 mg/cm² or less.

### Effects of the Invention

According to the manufacturing method of the present invention, a high-quality all-solid-state battery can be obtained, in which peeling at the boundary between the electrode and the solid electrolyte membrane in the all-solid-state battery is suppressed and which is excellent in short circuit possibility and cycle characteristics.

### BRIEF DESCRIPTION OF THE DRAWINGS

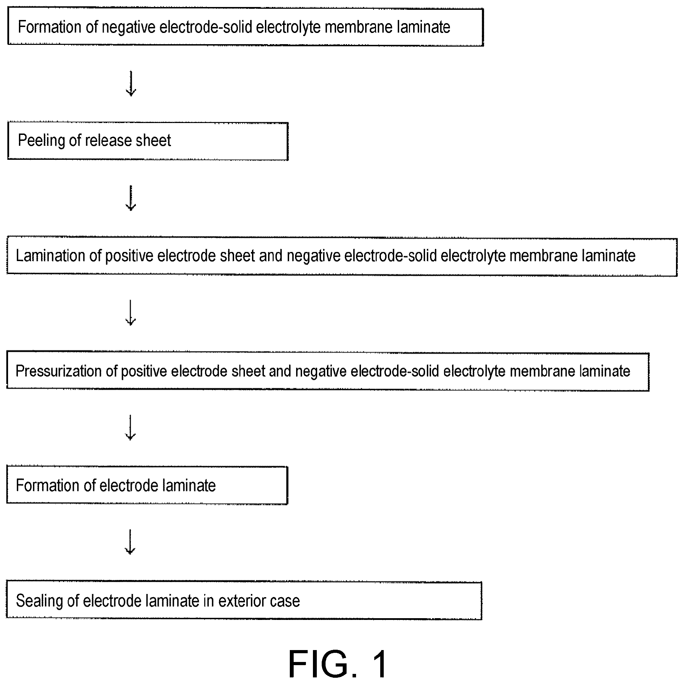

[FIG. 1] is a flow diagram showing an outline of an assembly process of an all-solid-state battery.

### DESCRIPTION OF THE EMBODIMENTS

Embodiments of the present invention will be described below with appropriate reference to the drawing. It should be noted that the present invention is not limited to the embodiments described below, and can be implemented within the scope of the gist of the present invention. The following is illustrative and is not intended to limit the present invention in any way.

### <All-solid-state Battery>

In this specification, an all-solid-state battery refers to a battery in which the electrolyte is composed of a solid electrolyte described later. In addition, in this specification, the term "all-solid-state battery" includes secondary batteries and primary batteries.

### <Negative Electrode>

The negative electrode can be a negative electrode used in a non-aqueous secondary battery material, and is not particularly limited. For example, the negative electrode includes a negative electrode current collector such as copper foil, and a negative electrode layer including a negative electrode active material and a solid electrolyte. The negative electrode layer preferably includes a binder. A negative electrode current collector made of stainless steel may be used instead of the negative electrode current collector such as copper foil, and a negative electrode in which a lithium metal layer is formed on the surface of the negative electrode current collector by rolling or the like may be used instead of the negative electrode active material. The negative electrode layer including the negative electrode active material, the solid electrolyte, and the binder can be formed on at least one surface of the negative electrode current collector.

In the case of using the negative electrode active material for the negative electrode, it is preferable to use a carbon-based active material. Natural graphite, artificial graphite, hard carbon, soft carbon, carbon black, or any mixture thereof can be selected as the carbon-based active material. Natural graphite includes natural graphite having amorphous carbon coated on the particle surface, and similarly artificial graphite includes artificial graphite having amorphous carbon coated on the particle surface. For these natural graphite and artificial graphite, primary particles, particles obtained by aggregating primary particles to form secondary particles, and mixtures thereof can be used. Also, the negative electrode active material may be a mixture of a carbon-based active material and a silicon-based active material. The negative electrode active material may include metal materials such as aluminum, silver, bismuth, calcium, cerium, indium, magnesium, tin, zinc, and nickel.

As the binder used in the negative electrode layer, examples include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene butadiene rubber (SBR), butadiene rubber (BR), chloroprene rubber (CR), isoprene rubber (IR), and acrylonitrile butadiene rubber (NBR), or polysaccharides such as carboxymethyl cellulose (CMC), xanthan gum, guar gum, and pectin. In addition, as the binder, polyacrylic acid, polymethacrylic acid, sodium polyacrylate, potassium polyacrylate, sodium polymethacrylate, potassium polymethacrylate; ethyl polyacrylate, ethyl polyacrylate, butyl polyacrylate, methyl polymethacrylate, ethyl polymethacrylate, butyl polymethacrylate, and any mixture thereof may be used. The content of the binder is preferably 1 mass% or more and less than 10 mass% with respect to the total solid content of the negative electrode layer. In the case of the content of the binder being too much, the portion where the negative electrode active material surface is covered by the binder increases, so there is a possibility that ionic conductivity and electronic conductivity may decrease. Additionally, in the case of the content of the binder being too little, there is a possibility that electrical contact between negative electrode active material particles may not be appropriately performed.

In addition to the above compounds, the components of the binder can further include carboxymethyl cellulose (referred to as "CMC"), which is a derivative of cellulose, or a metal salt of carboxymethyl cellulose (for example, sodium carboxymethyl cellulose, potassium carboxymethyl cellulose). In the case of further adding CMC or a metal salt of CMC as a binder component, the content of the CMC or CMC metal salt is preferably 0.05 mass% or more and 1.5 mass% or less with respect to the total solid content of the negative electrode layer.

The negative electrode layer may further include a conductive additive. The conductive additive is a material for reducing the resistance of the electrode. Examples of the conductive additive include carbon black such as acetylene black and Ketjen black, activated carbon, graphite, mesoporous carbon, fullerenes, carbon fibers such as carbon nanotube, carbon nanofiber, and carbon nanobrush, etc.

In the case of using carbon nanotube and carbon nanofiber as the conductive additives, the content of these conductive additives is 0.01 mass% or more and 3 mass% or less, and preferably 0.03 mass% or more and 1 mass% or less, with respect to the total solid content of the negative electrode layer.

In addition to the materials described above, electrode additives generally used for electrode formation, such as thickeners, dispersants, and stabilizers, can be appropriately used in the negative electrode layer.

### <Solid Electrolyte Membrane>

The negative electrode, solid electrolyte membrane, and positive electrode used in the manufacturing method of the embodiment include a solid electrolyte. The solid electrolyte used here can be exemplified by an oxide-based solid electrolyte and a sulfide-based solid electrolyte. The oxide-based solid electrolyte can be oxide-based materials such as garnet type, NASICON type, or perovskite type, but is not limited thereto. All known sulfide-based substances can be used as the sulfide-based solid electrolyte, for example, LiPO₄-Li₂S-SiS, 75%Li₂S-25%P₂S₅ mixture, Li₂S-SiS₂, Li₂S-P₂S₅, Li₃PS₄, Li₃PO₄-Li₂S-Si₂S, Li₃PO₄-Li₂S-SiS₂, LiI-Li₂S-B₂S₃, LiI-Li₂S-SiS₂, LiI-Li₂S-P₂S₅, LiI-Li₂S-P₂O₅, LiI-Li₃PO₄-P₂S₅Li₂S-P₂S₅-LiCl, Li₆PS₅Cl, Li₁₀GeP₂S₁₂, Li_{3.25}Ge_{0.25}P_{0.75}S₄, etc., but are not limited thereto. In the embodiment, it is preferable to use a sulfide-based solid electrolyte.

The solid electrolyte membrane used in the embodiment refers to a plane with a thin shape having a predetermined area and composed of a solid electrolyte. The solid electrolyte membrane may be a single layer (a solid electrolyte membrane composed of one type of solid electrolyte) or multiple layers (a solid electrolyte membrane in which two or more types of solid electrolyte membranes are laminated).

In the present invention, it is preferable to form the solid electrolyte membrane with a membrane thickness of 15 µm to 150 µm. If the membrane thickness is smaller than this range, the battery tends to cause short circuit in the case of press molding the solid electrolyte at high pressure. On the other hand, if the membrane thickness is larger than this range, it leads to excessive increase in cell volume, and the energy density per unit volume of the all-solid-state battery does not increase.

### <Release Sheet>

The release sheet refers to a flexible sheet in which a release agent layer that facilitates peeling of the solid electrolyte membrane is formed on the surface of a sheet member. For example, a general film made from polyester can be used as the flexible sheet, and a film mainly including components selected from polyethylene terephthalate, polyethylene-2,6-naphthalate, polybutylene terephthalate, polytrimethylene terephthalate, and mixtures thereof can be used, but is not limited thereto. As the release agent constituting the release agent layer, silicone-based, alkyd-based, olefin-based, fluorine-based, or alkyl-based release agents, or combinations thereof can be used. Among these, it is preferable to use a release agent including a silicone resin having reactive functional groups that can easily control the transfer amount of the release agent by controlling temperature and that cure with ultraviolet rays or heat.

### <Positive Electrode>

The positive electrode can be a positive electrode used in a non-aqueous secondary battery material, and is not particularly limited. For example, the positive electrode includes a positive electrode current collector, and a positive electrode layer including a positive electrode active material and a solid electrolyte. The positive electrode layer preferably includes a binder. The positive electrode layer including the positive electrode active material, the solid electrolyte, and the binder can be formed on at least one surface of the positive electrode current collector.

As the positive electrode current collector, stainless steel, aluminum, nickel, titanium, and a positive electrode current collector surface-treated with carbon, nickel, titanium, or silver on the surface of aluminum or stainless steel can be used.

The positive electrode active material preferably includes a lithium nickel-based composite oxide as the positive electrode active material. The lithium nickel-based composite oxide is a transition metal composite oxide containing lithium and nickel represented by the general formula LiₓNi_{y}Me_{(1-y)}O₂ (where Me is at least one metal selected from the group consisting of Al, Mn, Na, Fe, Co, Cr, Cu, Zn, Ca, K, Mg, and Pb). The positive electrode active material can also include a lithium manganese-based composite oxide. Examples of the lithium manganese-based composite oxide include lithium manganate (LiMnO₂) having a zigzag layered structure, spinel-type lithium manganate (LiMn₂O₄), etc. In addition, the positive electrode active material preferably includes, in particular, a lithium nickel manganese cobalt composite oxide having a layered crystal structure represented by the general formula LiₓNi_{y}Co_{z}Mn_{(1-y-z)}O₂. Here, x in the general formula is 1≦x≦1.2, y and z are positive numbers satisfying y+z<1, and the value of y is 0.5 or more. To obtain a high-capacity battery, it is particularly preferable that y>1-y-z, and y>z. The lithium nickel-based composite oxide having this general formula is a lithium-nickel-cobalt-manganese composite oxide. The lithium-nickel-cobalt-manganese composite oxide is a lithium nickel-based composite oxide suitably used for achieving high capacity of batteries. The positive electrode active material may also include the general formula LiMPO₄ (M is at least one selected from the group of Mn, Fe, Co, and Ni). The surface of the positive electrode active material may be coated with a substance such as LiNbO₃ to form a buffer layer. The buffer layer can suppress interface resistance between the positive electrode layer and the solid electrolyte membrane by forming the buffer layer forming substance to 10 nm or less. The buffer layer can be formed on the surface of the positive electrode layer by a sol-gel method or the like.

As the binder that forms the positive electrode layer together with the positive electrode active material, examples include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene butadiene rubber (SBR), butadiene rubber (BR), chloroprene rubber (CR), isoprene rubber (IR), and acrylonitrile butadiene rubber (NBR), or polysaccharides such as carboxymethyl cellulose (CMC), xanthan gum, guar gum, and pectin.

Further, the positive electrode layer may include a conductive additive. Examples of the conductive additive include carbon black such as acetylene black and Ketjen black, activated carbon, graphite, mesoporous carbon, fullerenes, carbon fibers such as carbon nanofiber, carbon nanotube, and carbon nanobrush, etc. In addition, electrode additives generally used for electrode formation, such as thickeners, dispersants, and stabilizers, can be appropriately used in the positive electrode layer.

### <Fabrication of Cell>

First, the fabrication of the negative electrode will be described. There are several methods for fabricating the negative electrode, but regardless of which method is used to fabricate the negative electrode, it is preferable to fabricate under dew point control in a low moisture environment in order to suppress moisture adsorption to the solid electrolyte.

### <Fabrication of Negative Electrode>

In the case of using a negative electrode with the negative electrode layer formed on the negative electrode current collector, a slurry in which a negative electrode active material, a solid electrolyte, and a binder are dispersed in a dehydration-treated organic solvent is applied to part or all of the surface of a negative electrode current collector such as copper foil, and dried to obtain a negative electrode precursor sheet. The obtained negative electrode precursor sheet can be compressed by a press molding method such as roll press, uniaxial press, rubber press, and isostatic press (CIP, WIP) to obtain a negative electrode sheet. Examples of the organic solvent include acetonitrile, xylene, dimethoxyethane, dimethyl carbonate, tertiary amine solvents such as triethylamine, heptane, hexane, tetrahydrofuran, toluene, N-methylpyrrolidone, as well as ether solvents, thiol solvents, and butyl butyrate, all of which are preferably dehydration-treated.

Alternatively, a negative electrode precursor sheet can be obtained by transferring granulated bodies of a negative electrode active material including at least the negative electrode active material, the solid electrolyte, and the binder to a negative electrode current collector. At this time, a surface layer including a polymer component such as a binder that enhances adhesion with the granulated bodies of the negative electrode active material may be formed in advance on the surface of the negative electrode current collector. The negative electrode layer may also include a conductive additive. The obtained negative electrode precursor sheet can be compressed by a press molding method such as roll press, uniaxial press, rubber press, and isostatic press (CIP, WIP) to obtain a negative electrode sheet.

Alternatively, a negative electrode sheet can be obtained by placing a metallic lithium layer such as lithium foil on part or all of a stainless steel negative electrode current collector, and bringing these into close contact by rolling treatment or the like.

### <Fabrication of Solid Electrolyte Membrane>

Next, a solid electrolyte membrane is formed on the surface of the negative electrode. Regardless of which method is used to form the solid electrolyte membrane, it is preferable to fabricate under dew point control in a low moisture environment in order to suppress moisture adsorption to the solid electrolyte.

The solid electrolyte membrane can be formed on the surface of the negative electrode by applying and drying a slurry in which a solid electrolyte is dispersed in an organic solvent on the surface of the negative electrode layer formed on copper foil or the surface of metallic lithium formed on stainless steel foil. Examples of the organic solvent include acetonitrile, xylene, dimethoxyethane, dimethyl carbonate, tertiary amine solvents such as triethylamine, heptane, hexane, tetrahydrofuran, toluene, N-methylpyrrolidone, as well as ether solvents, thiol solvents, and butyl butyrate, all of which are preferably dehydration-treated.

Alternatively, a solid electrolyte membrane can be formed on the surface of the negative electrode by applying and drying a slurry in which a solid electrolyte is dispersed in an organic solvent on the surface of a polyester film including polyester as the main component to form a solid electrolyte membrane, and then laminating the polyester film together to bring the solid electrolyte membrane into contact with the surface of the negative electrode layer or the surface of metallic lithium. In this case, it is preferable to form the solid electrolyte membrane on the surface of the above-mentioned release sheet on which the release agent layer is applied, and then laminate the release sheet together to bring the solid electrolyte membrane into contact with the surface of the negative electrode layer or the surface of metallic lithium. In the case of peeling the release film from the obtained laminate, a negative electrode-solid electrolyte membrane laminate is obtained, and on the surface of this solid electrolyte membrane, the release agent layer of the release sheet is transferred to some extent, and it is very preferable that the release agent remains on the solid electrolyte membrane surface. By laminating such a negative electrode-solid electrolyte membrane laminate on the positive electrode described later, the release agent can be present between the solid electrolyte membrane and the positive electrode. It is very preferable that the release agent is present between the solid electrolyte membrane and the positive electrode at a density of 0.01 mg/cm² or more and 0.5 mg/cm² or less.

A negative electrode-solid electrolyte membrane laminate is obtained by compressing the laminated negative electrode and solid electrolyte membrane by a press molding method such as roll press, uniaxial press, rubber press, and isostatic press (CIP, WIP). In the case of laminating and pressurizing the solid electrolyte together with a polyester sheet, the polyester film is peeled off from the solid electrolyte membrane. At this time, it is also preferable to use a polyester film whose surface is coated with a release agent such as silicone so that the polyester film can be easily peeled off from the solid electrolyte membrane.

### <Fabrication of Positive Electrode>

Next, the fabrication of the positive electrode will be described. Regardless of which method is used to fabricate the positive electrode, it is preferable to fabricate under dew point control in a low moisture environment in order to suppress moisture adsorption.

A positive electrode sheet is obtained by applying and drying a slurry in which a positive electrode active material, a solid electrolyte, and a binder are dispersed in a dehydration-treated organic solvent on part or all of the surface of a positive electrode current collector such as aluminum. Examples of the organic solvent include acetonitrile, xylene, dimethoxyethane, dimethyl carbonate, tertiary amine solvents such as triethylamine, heptane, hexane, tetrahydrofuran, toluene, N-methylpyrrolidone, as well as ether solvents, thiol solvents, and butyl butyrate, all of which are preferably dehydration-treated.

### <Formation of Electrode Laminate>

The positive electrode sheet is laminated on the negative electrode-solid electrolyte membrane laminate to obtain an electrode laminate precursor. In the case of using a sulfide-based solid electrolyte as the solid electrolyte, the ionic conductivity of the solid electrolyte decreases due to exposure to moisture. Therefore, after obtaining the electrode laminate precursor, it is desirable to compress the electrode laminate precursor within a predetermined time by a press molding method such as roll press, uniaxial press, rubber press, and isostatic press (CIP, WIP), to obtain an electrode laminate. The predetermined time is, for example, within 2 days in an environment with a dew point of -40°C and a moisture concentration of 127 ppm or less. In the case where this time elapses, there is a risk of performance deterioration due to water absorption of the solid electrolyte, which is also undesirable from the viewpoint of reduced productivity of all-solid-state batteries.

The positive electrode can be first roll-pressed in the state of a thin sheet formed by simply forming a positive electrode layer on a positive electrode current collector, and then laminated on the negative electrode-solid electrolyte membrane laminate. Alternatively, from the viewpoint of production efficiency, the positive electrode sheet can be placed on the negative electrode-solid electrolyte membrane laminate without pressurizing the positive electrode sheet alone, or by applying only the pressure to the extent that the positive electrode sheet is pressed down by the transport arm of the laminating machine. This process becomes the process immediately before performing the isostatic press for forming the electrode laminate.

In the embodiment described up to this point, the positive electrode sheet is stacked after fabricating the negative electrode-solid electrolyte membrane laminate. However, it is also possible to laminate and press a positive electrode and a solid electrolyte membrane formed on the surface of a polyester sheet, then peel off the polyester sheet to create a positive electrode-solid electrolyte membrane laminate, and then stack a negative electrode sheet on the surface where the release agent remains.

### <Sealing of Electrode Laminate>

It is desirable to promptly seal the obtained electrode laminate in an exterior case. After attaching one end of a rectangular metal plate serving as the negative electrode terminal to the negative electrode current collector and attaching one end of a rectangular metal terminal serving as the positive electrode terminal to the positive electrode current collector, the electrode laminate is housed in an exterior case made of aluminum. It is preferable that a resin layer such as polyolefin is formed on at least the surface facing the electrode laminate among the inner surfaces of the exterior case. The electrode laminate is sealed with the aluminum exterior case by heating the resin layer to melt the resin, and solidifying the resin again. At this time, the other end of the positive electrode terminal and the other end of the negative electrode terminal are arranged to be drawn out of the exterior case. A layer of resin that is the same as or different from the type of resin used for the resin layer on the inner surface of the exterior case can also be provided at the portions where the positive electrode terminal and the negative electrode terminal contact the resin layer on the inner surface of the exterior case.

Through the above method, an all-solid-state battery including an electrode laminate formed by laminating a negative electrode, a solid electrolyte membrane, and a positive electrode can be obtained. Another embodiment of the present invention provides an all-solid-state battery in which the negative electrode includes at least a negative electrode layer, the positive electrode includes at least a positive electrode layer, the negative electrode layer is in contact with the solid electrolyte membrane, the positive electrode layer is in contact with the solid electrolyte membrane, and a release agent layer including a silicone resin and conductive powder is present at least at one of the boundary between the negative electrode layer and the solid electrolyte membrane and the boundary between the positive electrode layer and the solid electrolyte membrane.

### Examples

A battery was fabricated according to the flow shown in the embodiment of the present invention. FIG. 1 is a flow diagram summarizing the embodiment of the present invention.

### [I] Formation of Negative Electrode-Solid Electrolyte Membrane Laminate

(1) A foil (manufactured by Honjo Metal Co., Ltd.) having a 20 µm metallic lithium layer formed on the surface of a stainless steel negative electrode current collector with a thickness of 10 µm was prepared as a negative electrode.
(2) A slurry in which Li₆PS₅Cl (D50: 8 µm) as a solid electrolyte was dispersed in xylene as an organic solvent was applied to the surface of a release film (release sheet) having a release agent layer formed on a polyester film including polyester as a main component, and dried to obtain a solid electrolyte membrane. The obtained solid electrolyte membrane was laminated together with the polyester film to be in contact with the surface of metallic lithium.
(3) The negative electrode-solid electrolyte membrane laminate of the above (2) was vacuum-sealed by lamination in a nylon vacuum pack, and held at room temperature (25°C) under a pressure of 400 MPa for 1 minute. Thereafter, while maintaining the laminate sealing, the negative electrode-solid electrolyte membrane laminate was compressed by an isostatic press method to obtain a negative electrode-solid electrolyte membrane laminate having a negative electrode layer porosity of 7%. The size of the negative electrode-solid electrolyte membrane laminate was 50 mm × 70 mm.
(4) The polyester film was peeled off from the solid electrolyte membrane to obtain a negative electrode-solid electrolyte membrane laminate.

### [II] Peeling of Release Sheet

(1) By adjusting the temperature during the isostatic press method in the above [I] (3), the transfer amount of the release agent to the negative electrode-solid electrolyte membrane laminate obtained in the above [I] (4) was varied as shown in Table 1.

### [III] Lamination of Positive Electrode Sheet and Negative Electrode-Solid Electrolyte Membrane Laminate

(1) A slurry in which 70 mass% of LiNi_{0.8}Co_{0.1}Mn_{0.1}O₂ (D50: 8 µm) having LiNbO₃ with a thickness of 10 nm coated on the particle surface as a positive electrode active material, 25 mass% of Li6PS5Cl (average particle diameter: 1 µm) as a solid electrolyte, 2 mass% of acetylene black (manufactured by Timcal Japan Co., Ltd.), and 3 mass% of styrene-butadiene rubber (SBR) as a binder were dispersed in xylene as an organic solvent was applied to an aluminum foil (manufactured by UACJ Corporation) having a thickness of 10 µm, and dried to form a positive electrode layer, thereby obtaining a positive electrode.
(2) The positive electrode obtained in the above (1) was cut to 45 mm × 65 mm, and laminated such that the surface of the negative electrode-solid electrolyte membrane laminate in [I] on which the release agent was transferred to provide the release agent layer was in contact with the positive electrode layer, thereby obtaining an electrode laminate precursor. The number of laminated layers of the positive electrode and the negative electrode-solid electrolyte membrane laminate was one layer each.

### [IV] Pressurization of Electrode Laminate

(1) The electrode laminate precursor obtained in each example was vacuum-sealed by lamination in a nylon vacuum pack, and held at room temperature (25°C) under a pressure of 400 MPa for 1 minute. Next, while maintaining the laminate sealing, the electrode laminate precursor was compressed by an isostatic press method to obtain an electrode laminate having a positive electrode layer porosity of 5%.

### [V] Sealing in Exterior Case

(1) The electrode laminate obtained in the above [IV] was sealed in an exterior case by the method described in the embodiment to obtain a battery in which a positive electrode terminal and a negative electrode terminal were drawn out of the aluminum exterior case (manufactured by Dai Nippon Printing Co., Ltd.).

For the obtained battery, the 1 kHz resistance value at 25°C and whether short circuit occurred after charge-discharge (20 cycles are shown in Table 1.

The 1 kHz resistance is a value obtained by measuring the resistance value by the alternating current (1 kHz ± 0.2 Hz) four-terminal method (using HIOKI 3560 AC milliohm Hitester). It was found that the 1 kHz resistance changes according to the amount of release agent transferred onto the solid electrolyte membrane.

In addition, the presence or absence of short circuit in the battery after 20 cycles of charge-discharge was evaluated under the following charge-discharge conditions: constant current charging at 0.05 C to an upper limit voltage of 4.2 V in a constant temperature bath at 45°C, then constant voltage charging such that the total charging time for 1 cycle became 20 hours, constant current discharging at 0.05 C to 3.0 V, and repeating 20 times. A current was applied to the battery, and cases where short circuit occurred were evaluated as "Yes", and cases where short circuit did not occur were evaluated as "No".

**[Table 1]**

| Table 1: Amount of release agent transferred to solid electrolyte and performance of battery | | | |
|---|---|---|---|
| | Amount of release agent transferred to solid electrolyte membrane [mg/cm²] | 1 kHz resistance at 25°C [Ω] | Short circuit of battery after 20 cycles |
| Example 1 | 0.09 | 10 | No |
| Example 2 | 0.5 | 100 | No |
| Example 3 | 0.01 | 10 | No |
| Comparative Example 1 | 1.0 | 1000 | No |
| Comparative Example 2 | None | 3 | Yes |

The examples in the present invention are merely examples, and are not limited thereto. For example, although a laminate film made of aluminum is used for the exterior case, a rigid can case made of aluminum or a cylindrical type may also be used. Although Li₆PS₅Cl is used as the solid electrolyte, the present invention can be applied in the case of any sulfide-based solid electrolyte with low chemical stability with water. Although a positive electrode and a negative electrode adjusted to predetermined dimensions in advance are used for the positive electrode and the negative electrode, the positive electrode and the negative electrode may be quickly cut to a predetermined shape after lamination. In addition, it goes without saying that changes in design are possible within a range that does not affect the invention.

## Claims

1. A method for manufacturing an all-solid-state battery, comprising a step of laminating a negative electrode, a solid electrolyte membrane, and a positive electrode to form an electrode laminate, and comprising:
a step of applying a slurry comprising a solid electrolyte in a solvent onto a surface of a film on which a release agent layer comprising a release agent is formed, to form the solid electrolyte membrane;
a step of removing the film from the release agent layer; and
a step of laminating the solid electrolyte membrane comprising the release agent layer exposed by removing the film, on the positive electrode,
wherein the solid electrolyte membrane and the positive electrode are laminated such that the release agent is present between the solid electrolyte membrane and the positive electrode at a density of 0.01 mg/cm² or more and 0.5 mg/cm² or less.

2. The method for manufacturing an all-solid-state battery according to claim 1, wherein the release agent layer comprises a silicone resin.
